# EUROPEAN PATENT APPLICATION

(11) **EP 1 524 455 A2**
(43) Date of publication of application: **20.04.2005**
(21) Application number: 04021187.2
(22) Date of filing: 07.09.2004
(51) Int. Cl.: F16H 25/20

(54) **Electric cylinder**

(30) Priority: 16.10.2003 IT MI20032000
(71) Applicant: UNIVER S.p.A., I-20128 Milano (IT)
(72) Inventor: Migliori, Luciano, 20124 Milan (IT)
(74) Representative: Coloberti, Luigi

(57) **Abstract**

An electrically actuated linear actuator (10) capable of simulating the performances of a pneumatic cylinder; the actuator comprises a gear reduction unit (16) connected to a slidable rod (14) by means of a drive device comprising a screw-nut assembly (20, 21). The gear reduction unit (16) is slidably supported and, at the end of the working stroke of the actuator (10), is moved backwards by the rotation of the screw (20) of the drive device (20, 21), against biasing springs (33) which provide a forward thrust on the rod (14). An electronic control unit (51) selectively controls the power supply to the electric motor (15) and to a locking brake (17), in relation to control signals emitted by a rotary signal generator (29).

## Description

### BACKGROUND OF THE INVENTION

This invention refers to an electrically operated linear control actuator, and in particular relates to a programmable electrically operated actuator capable of simulating all the performances of a usual pneumatic cylinder.

### PRIOR ART

Pressurised air is a source of power readily available for use in pneumatic cylinders or more in general in linear actuators; consequently, pneumatic cylinders are widely used in several applications due to the possibility of easily controlling the various working parameters, such as acceleration, speed and final thrust exerted by the cylinder, by simply varying the pressure and the flow rate of the pressurised air.

The use of pneumatic cylinders also proves to be advantageous in all those applications in which it is necessary to maintain a torque or working thrust; at the end of the stroke moreover, the presence of air under pressure in the chambers of the cylinder, enables the working thrust to be maintained for a prolonged period of time without any consumption of pneumatic energy.

A further feature of a pneumatic cylinder consists in the ease with which the speed and working thrust can be varied, by means of flow or pressure regulators, with simple and low-cost solutions.

All these characteristics have made and still continue to make the pneumatic cylinder essential for a large number of applications.

However, the use of pressurised air with pneumatic cylinders, involves a number of drawbacks, both in terms of costs involved in the production and consumption of the pressurised air, and in terms of acoustic and environmental pollution.

Electric linear actuators having characteristics wholly different, or from certain points of view not comparable to those of a pneumatic cylinder have been developed and used as an alternative to the pneumatic actuators, as shown in DE-A-199 03 718 and EP-A-0 632 181.

In particular, for applications which require high level performances, use is made of the so-called "electric axes" substantially consisting of an electric motor provided with a gear-reduction unit, a screw-nut assembly capable of transforming the rotary motion of the motor into a linear movement, and sophisticated electronics.

Although the use of electric axes is widespread in machine tools and robotic due to the extremely high performances that they normally offers, electric axes nevertheless prove to be structurally complex, and with such extremely high costs as to prevent them from falling within the sphere of normally commercial components; moreover, electric axes do not possess the typical characteristics of a pneumatic cylinder, such as low energy consumption during movement, as well as generation and maintenance of a high thrust at the end of the working stroke.

### SCOPES OF THE INVENTION

The main scope of this invention is to provide an electric linear actuator hereinafter also referred to as "electric cylinder" also, which is capable of simulating in all aspects the performances and dimensions of a usual pneumatic cylinder, utilising an electric power source, which is comparatively more economical and easier to handle than pressurised air.

A still further scope of this invention is to provide an electric cylinder, as defined above, by means of which it is possible to control and program the various working parameters by means of a suitable electronic control unit.

A still further scope of this invention is to provide an electric cylinder which stands as an alternative to the usual pneumatic cylinders, both in terms of dimensions and cost, and at the same time is improving and easily adaptable in substitution of the pneumatic cylinders already in use.

A still further scope of this invention is to provide an electric cylinder characterised by extremely low energy consumptions, very much lower than those of a usual pneumatic cylinder having comparable characteristics in terms of power and use.

### BRIEF DESCRIPTION OF THE INVENTION

The foregoing can be achieved by means of an electrically actuated linear actuator according to claim 1.

According to a first aspect of this invention, an electrically actuated linear actuator has been provided, comprising:
- a cylindrical casing;
- an electric motor and a gear reduction unit having a drive shaft, inside said casing;
- a rod member protruding from said casing, for connection to an external load, said rod member being axially movable between a retracted and an advanced position along a working stroke;
- a drive device between the gear reduction unit (16) and the rod member, said drive device comprising a first threaded member rotatably supported and operatively connected to the drive shaft of the gear reduction unit, and a second member threadably engaging with and linearly movable in respect to the first threaded member; and
- an electronic control unit, characterised in that:
   the first threaded member of the drive device is movably supported in said casing;
   in that a thrust member and elastically yielding springs means are arranged to allow a backward movement of the first threaded member while allowing a rotation of the same at an end of the working stroke, and to exert a thrust by said rod member on the external load;
   the actuator also comprising an electrically actuable locking device for locking the rotation of the electric motor; and
   a programmable electronic control unit, said control unit being programmed for controlling the power supply to the electric motor during the working stroke, respectively for disconnecting the power source from the motor (15) and operate the locking device, at said end of the working stroke.

According to a further feature of this invention, the electronic control unit can be programmed to control certain working parameters, for example acceleration, speed, positioning and final thrust exerted by the movable rod member connected to the external load.

According to a further feature of the invention, a rotary signal generator is supported by the sliding thrust member to provide control signals for the electronic control unit, to control the movement of the rod member during the working and at the end of the stroke; the thrust member is therefore subject to a controlled thrust action by counter springs provided to generate and maintain a thrust of a pre-established value on the rod member at the end of the stroke, with the motor in a locked condition.

According to a still further feature of the invention, the electric motor, the gear reduction unit, the electric locking device, and the signal generator, are axially movable and aligned with a screw-nut assembly of the drive device of the rod member connected to the external load; the apparatus is preferably housed in a casing having standardised cylindrical shapes and sizes, equivalent to those of a usual pneumatic cylinder.

As an alternative, the electric geared motor and the locking device can be disposed on one side of the screw-nut assembly of the drive device; in this case, it is necessary to provide an appropriate mechanical connecting system capable of allowing the required relative movement at the end of the working stroke.

### BRIEF DESCRIPTION OF THE DRAWINGS

These and further features and advantages of the electrically actuable linear actuator or electric cylinder according to this invention, will be more clearly evident from the following description with reference to the accompanying drawings, in which:
Fig. 1 shows a longitudinal cross-sectional view of the electric cylinder according to a preferential embodiment;
Fig. 2 shows a longitudinal cross-sectional view of the electric cylinder, on a plane at right angle with that of Fig. 1;
Fig. 3 shows an enlarged detail of the drive device;
Fig. 4 shows an enlarged detail of the locking device for the motor;
Fig. 5 shows a block diagram of the electronic control unit;
Fig. 6 shows a flow diagram illustrating the operative procedure of the electric cylinder.

### DETAILED DESCRIPTION OF THE INVENTION

With reference to the Figures from 1 to 4 a description will be given of a preferential embodiment of the electric cylinder according to the invention.

The general characteristics of an electric cylinder according to the invention, consist in the use of a reduction unit for a geared motor, combined with an electric locking device for the same electric motor, and a drive device comprising a screw-nut mechanism for a rod or movable member connectable to an external load; a rotary threaded member of the drive device is movably supported and operatively connected to the gear reduction unit, proving an elastically biased thrust device which enables it to perform an axial backward movement in a controlled mode, and to generate a thrust force at an end of the working stroke.

In fact, when the rod member for connection to the external load stops, since the motor continues to rotate for a short time, the rotary member of the drive device, and the relevant thrust device are made to move back by compression of springs which, following the locking of the rotation of the motor, react to provide and maintain a forward thrust on the rod member having a pre-established value; an electronic unit selectively controls the power supply to the electric motor and the locking device. The rotary member of the drive device can be guided and made axially movable together with the reduction unit of the geared motor, or separately; in this case it is necessary to provide an operative connection with the shaft of the reduction unit, capable of allowing a relative sliding movement.

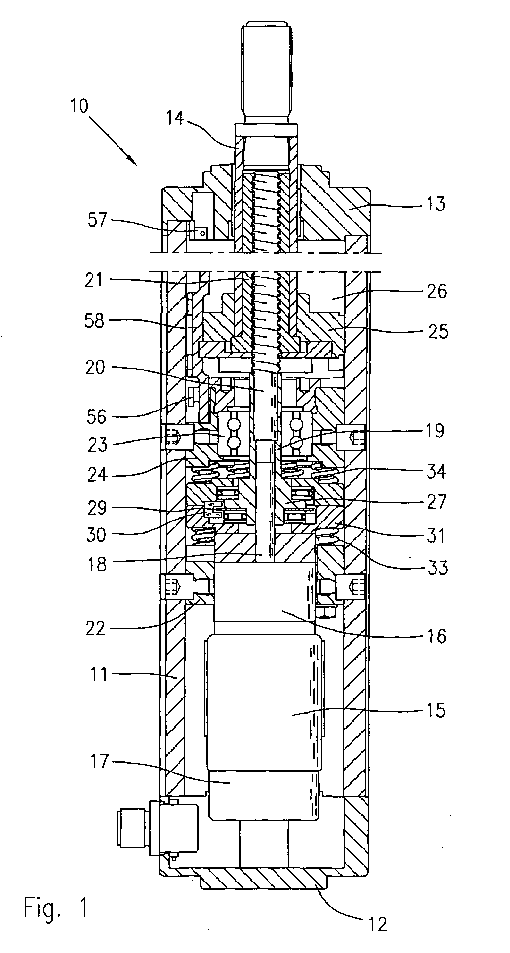

More precisely, the electric cylinder 10 shown in the example of figures 1-4, comprises an external tubular casing 11 closed at the bottom by a cover or cup member 12 conformed for containing an electronic control circuit, while at its fore end the casing 11 is closed by a plate 13 having a central hole from which a sliding rod 14 or movable member protrudes for connection to an external load.

Inside the casing 11, a gear reduction unit is provided with the possibility of performing short sliding movements in the direction of the longitudinal axis of the cylinder 10.

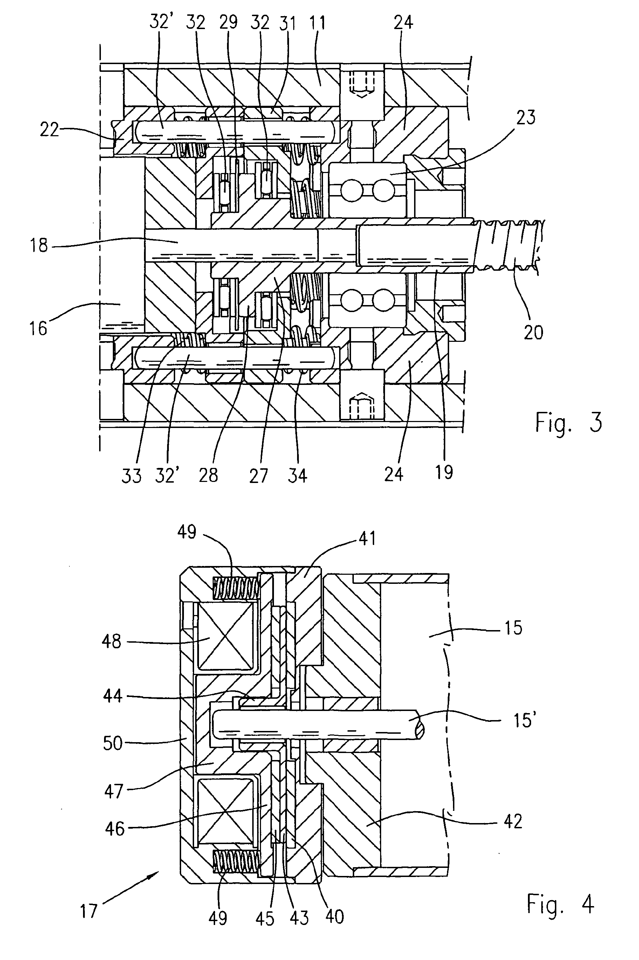

More precisely, reference 15 indicates an electric motor, reference 16 a gear reduction unit, while reference 17 indicates an electric locking device for locking the rotation of the motor 15 as explained further on with reference to Fig. 4. The shaft 18 of the reduction unit 16 is in turn operatively connected to the rod 14, by means of a drive device of the screw-nut type, capable of allowing the transformation of the rotation of the shaft 18 into a relative axial movement of the rod member 14, as explained further on.

The motor 15 and the gear reduction unit 16 can be made and disposed in any way with respect to the drive device; it is preferable to use a micromotor normally available on the market, due to its low consumption and due to its possibility of providing a high working torque. The drive shaft 18 of the gear reduction unit is mechanically connected, by means of a hollow shaft 19, to a first rotatably supported threaded member 20 capable of threadably engaging into a second threaded member 21 which extends into the tubular rod 14 of the actuator 10.

In the example shown, the first threaded member 20 of the drive device consists of the screw spindle, while the second threaded member consists of a screw nut 21; however, their reversal disposition is not excluded.

For safety reasons, the screw-nut assembly can be of the reversible type, of single or multiple thread type or starts.

The motor 15 is secured to a reduction unit 16, which is supported and guided for a short axial movement, by an annular element 22 inside the casing 11.

The hollow shaft 19 is supported and axially guided by a ball bearing 23; the bearing 23 is in turn supported by a second annular element 24 secured inside the casing 11 in a position axially spaced apart from the first annular element 22.

The rod member 14 of the actuator 10, and the screw nut 21 are connected to a guide member, for example in the form of a piston member 25, to enable them to axially slide, preventing their rotation.

The guide member 25 slides axially within an elongated chamber 26, which extends along the entire working stroke of the actuator.

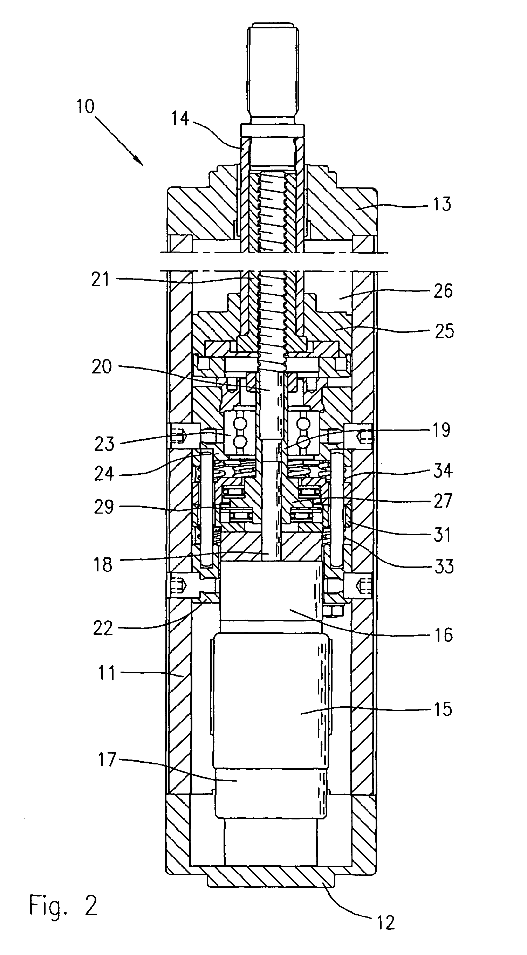

Still with reference to Figs. 1 and 2, the hollow shaft 19, which connects the reduction unit 16 to the screw-nut assembly 20, 21, extends from one side of a sleeve 27 secured to rotate with the shaft 18; the sleeve 27 is provided with a circular flange 28 (Fig. 3).

The apparatus also comprises a rotary signal generator consisting, for example, of a toothed or perforated disk 29, and a photoelectric cell 30 for generating electric control signals having a frequency proportional to the rotational speed of the output shaft 18 of the reduction unit; these signals are used by a electronic control unit to control all the working parameters throughout the entire working stroke of the electric cylinder, as explained further on.

The signal generator 29, 30 is housed in an annular block 31 inside the casing 11, slidably movable along two guide pins 32' that prevent it from rotation. The sleeve 27 with the disk 29 of the signal generator, are supported within the sliding block 31 by means of bearings 32, on the two opposite sides of the flange 28.

Disposed between the thrust member or annular sliding block 31 and the two shoulder rings 22, 24, are two oppositely arranged sets of springs 33 and 34 which perform the dual function of maintaining the sliding block 31 centered so as to prevent high frictional forces from being generated between the screw threads during the working, and of reacting themselves at the end of the working stroke following a short backward movement of the screw 20 when the rod member 14 of the electric cylinder or actuator is stopped; in this way it is possible to maintain a final thrust of a pre-established value after the rotation of the electric motor 15 has been locked.

In this connection, as shown in the enlarged detail of Fig. 4, the locking device 17 comprises an electric brake, which in the deactivated condition locks the rotation of the shaft 15' of the motor by means of appropriate clutch disks.

More precisely, the locking device 17 comprises a first clutch disk 40 on one side of a plate 41 secured to the base 42 of the electric motor 15.

The locking device 17 comprises also a second clutch plate 43 having a hub 44 splined to the drive shaft 15'. A third clutch plate 45 is supported by an axially movable cap 46; the cap 46 has a cylindrical core 47 subject to the action of the magnetic flux generated by a winding 48.

In the deactivated condition of the winding 48, the cap 46 and the clutch disk 45 are pushed against the clutch disk 43 by a plurality of springs 49 disposed in corresponding holes along the peripheral edge of a cover 50; in the normally de-energized condition of the electric winding 48, the springs 49 consequently push the cap with the disk 45 forward, locking the rotation of the intermediate clutch disk 43 against the stationery disk 40. Conversely, when power is supplied to the electric winding 48, the disk 43 is released thereby allowing the rotation of the drive shaft 15'.

The example of Fig. 4 concerns a brake which under non-powered conditions is normally locked; this solution proves to be preferential in that it prevents any possible power consumption in the locked condition of the electric cylinder, there by helping to maintain the maximum thrust force equivalent to a usual pneumatic cylinder. However, it is possible to use any other type of locking device, for example a normally powered brake, as an alternative to or in place of the one shown.

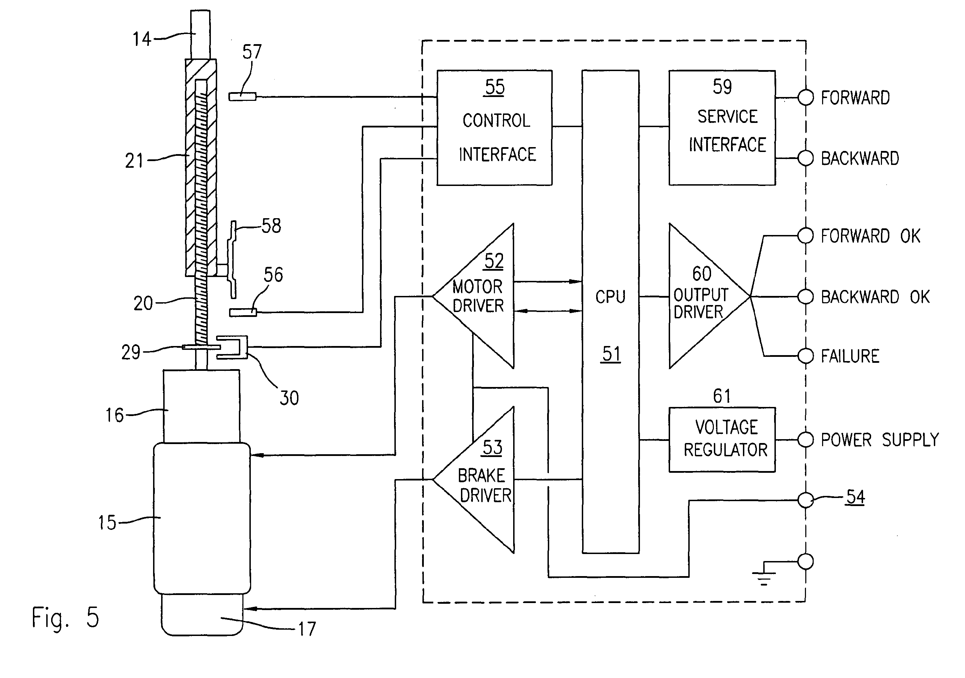

Fig. 5 of the accompanying drawings shows the block circuit of an electronic control unit for the electric cylinder 15, the brake 17 and the various sensors for generating control signals.

More precisely, the control unit consists of an electronic card housed in the cover 12; it comprises a process unit 51, for example a CPU suitably programmable to control the entire functioning of the electric cylinder and to control its various working parameters.

The process unit 51 is connected to a first electric circuit or motor driver 52 for supplying power to and controlling the electric motor 15.

The process unit 51 is also connected to a second electric circuit or brake driver 53 for supplying power to and controlling the brake 17.

The two power supply circuits 52 and 53 are in turn connected to a source of electric power 54.

Lastly, the process unit 51 is connected, by a control interface 55, to a first photoelectric cell 30 of the rotary signal generator 29, and is connected to a second photoelectric cell 56 and to a third photoelectric cell 57 in the chamber 26 of the electric cylinder, to control the position of the rod member 14 at both ends of the working stroke.

The photoelectric cells 56 and 57 are activated and deactivated by a flag 58 movable with the rod member 14, for example secured to the guide member or piston 25, as shown in the cross section view of Fig. 1.

On the inlet side, the process unit 51 is connected, by means of a service interface 59, to a central control unit for transmitting commands for the forward and backward movements of the electric cylinder; the process unit 51 is also connected to a circuit or output driver 60 for issuing service signals. A voltage regulator 61 controls the power supply.

The electric motor 15 and the gear reduction unit 16 can be of any type; they constitute a reduction unit preferably comprising a micromotor powered by DC direct current, and an epicyclic type reduction unit. For the purposes of this description, in a way known to the experts in the field, microelectric motor is understood to mean a step by step motor or a motor powered by direct current, having small dimensions and low power consumption suitable for the intended use; the micromotor is powered with DC direct current at 12 or 24 volts and is characterised by a high speed of rotation, equivalent to or higher than 6,000 revolutions a minute and by a low output torque which is then geared up considerably by the reduction unit.

The use of micromotors and small-sized reduction units, powered with DC direct current, proves to be advantageous in that it offers the possibility of considerably limiting the overall dimensions of the entire electric cylinder, which can thus fall within the sphere of the standardised dimensions of usual pneumatic cylinders, making at the same time use of a suitable electric power or torque, enabling a high degree of control over all the operative parameters.

As mentioned initially, the electric cylinder according to this invention is capable of simulating and achieving all the performances of a usual pneumatic cylinder; in particular it offers the possibility of maintaining a stroke-end thrust, without consumption of energy.

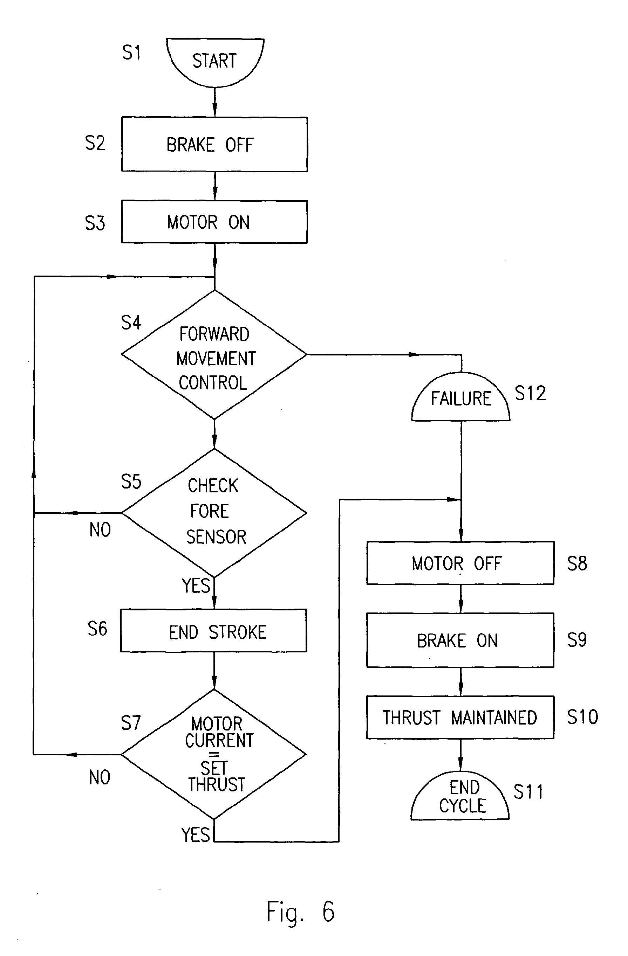

The foregoing can be more clearly understood by reference to the functional diagram of Fig. 6.

Under deactivated conditions of the electric motor 15 and brake 17, the springs 49 push forward the cap 46 with the disk 45, locking the rotation of the intermediate clutch disk 43 and consequently the rotation of the motor and the drive shaft 15'.

As soon as the process unit 51, through the service interface 59, receives a start signal (step S1), the process unit 51, by means of the circuit 53 releases the brake 17 (step S2); simultaneously, by means of the circuit 52, it supplies power to the motor 15 (step S3). Therefore, the motor 15, by means of the reduction gear unit 16 and the screw-nut assembly 19 and 20, moves forward the rod 14 of the actuator. During this step, by means of the signals emitted by the signal generator 30, 31, a continuous control can be made of the position, acceleration and feed speed of the rod 14 (step S4).

During the forward movement of the rod 14, the electric motor 15 consumes an extremely limited amount of energy due to the fact that, compared to a pneumatic cylinder the maximum force for the external load is not yet required. For as long as the check of the fore sensor 57 remains negative (step S5-NO), the process unit continues to command the rotation of the electric motor 15 and to control the forward movement of the rod 14; at the end of the stroke, as soon as the process unit 51 detects that the fore sensor 57 has revealed the arrival of the flag 58, (step S5 - SI), it goes on to step S6. In this step, the rod 14 of the cylinder has stopped; however, it still does not exert the maximum force required on the load. Therefore, by keeping the motor 15 powered for a short period of time, the screw 20 continues to rotate and, by reaction, is made to move backwards with the thrust member 31; in this specific case by the motor 15 itself, compressing the springs 33. As the compression of the springs 33 increases, the torque generated by the motor 15 and consequently the current increases.

The current of the motor increases until it reaches a maximum value preset in the programme of the process unit 51, until the desired thrust is reached (step S7) . More precisely, when the rod 14 stops, the electric motor 15 continues to be powered and consequently tends to allow the rotation of the screw 20 to continue; however, since the forward movement of the nut screw 21 is prevented, the system reacts by shifting backwards the entire assembly comprising the screw 20, the signal generator 30, the reduction unit 16, the motor 15 and the brake 17, reloading the set of counter springs 33.

When the loading of the springs reaches a certain value corresponding to a precise value of the input current of the motor, the control unit 51 commands the driver circuit 52 to shut-off the power supply to the motor 15 (step S8); it simultaneously commands the power supply circuit or brake driver 53 to operate the locking brake 17 (step S9) which from this moment prevents the rotation of the motor 15 and the screw 20 of the drive device.

In this condition (step S10), the counter springs 33 previously loaded, maintain the necessary forward thrust, thereby completing the control cycle (step S11) .

In the event of a failure occurring during the forward movement of the rod 14 (step S4), the process unit 51 detects such irregular condition (step S12), shutting-off the power supply to the electric motor 15, and at the same time providing an appropriate signal by means of the circuit 60.

In the case shown, the motor 15 and the reduction unit 16, or more simply the reduction unit with the respective locking device 17 and the rotary signal generator 29, 30, are disposed axially aligned with the screw 20; they are also supported axially movable with the screw 20 during the stopping, for controlling the final thrust of the electric cylinder. It is understood however that within the sphere of the general precepts of this invention, other solutions and/or dispositions of the electric motor 15, the locking device 17, the reduction unit 16 and the rotary signal generator 29, 30 are possible with respect to the screw 20 of the drive device with the rod 14 of the cylinder.

Without prejudice to the fact that the linear disposition constitutes one of the preferential solutions, a disposition of the motor 15 with the brake 17 and the reduction unit 16 on one side of the screw 20 may nevertheless be contemplated, in this case making it possible to substantially reduce the lengthwise dimensions of the entire electric cylinder, in which case it is necessary to provide a suitable transmission system between the reduction unit 16 and the screw 20 capable of allowing the axial backward movement of the latter.

Within the sphere of this invention, other solutions are possible; for example the motor and the reduction unit could be fixed and with only the screw 20 moving back, by providing a mechanical connection with the shaft of the reduction unit 16 capable of enabling both the rotation and the relative axial sliding of the screw 20.

Therefore, other modifications or variations may be made, without thereby departing from the scope of the claims.

## Claims

1. An electrically actuated linear actuator (10), comprising:
- a cylindrical casing (11);
- an electric motor (15) and a gear reduction unit (16) having a drive shaft (18) inside said casing (11);
- a rod member (14) protruding from the casing (11) for connection to an external load, said rod member being axially movable between a retracted and an advanced position along a working stroke;
- a drive device (20, 21) between the gear reduction unit (16) and the rod member (14), said drive device (20, 21) comprising a first threaded member (20) rotatably supported and operatively connected to the drive shaft (18) of the gear reduction unit (16), and a second member (21) threadably engaging with and linearly movable in respect to the first threaded member (20); and
- an electronic control unit (50), **characterised in that**:
the first threaded member (20) of the drive device (20, 21) is movably supported in said casing (11);
**in that** a thrust member (31) and elastically yielding springs means (33, 34) are arranged to allow a backward movement of the first threaded member (20) while allowing a rotation of the same first threaded member (20) at an end of the working stroke and to provide a thrust by said rod member (14) on the external load;
the actuator also comprising an electrically actuable locking device (17) for locking the rotation of the electric motor (15);
a rotary signal generator (29) operatively connected to said drive shaft (18); and
a programmable electronic control unit (50) said control unit (50) being programmed for controlling the power supply (52) to the electric motor (15) during the working stroke, respectively for disconnecting the power source (52) from the motor (15) and operate the locking device (17), at said end of the working stroke.

2. A linear actuator according to claim 1, **characterised in that** the electric motor (15), the reduction unit (16), the locking device (17) and the rotary signal generator (29), are movably supported with said first threaded control member (20).

3. A linear actuator according to claim 2, **characterised in that** the electric motor (15), the reduction unit (16), the locking device (17) and the signal generator (29) are axially aligned to said first threaded control member (20).

4. A linear actuator according to claim 1, **characterised in that** the electric motor (15), the reduction unit (16) and the locking device (17) are positioned on a side of the drive device (20, 21).

5. A linear actuator according to claim 1, **characterised in that** the thrust member (31) comprise an annular-shaped sliding block, and **in that** the rotary signal generator (29) is inside said annular-shaped sliding block (31).

6. A linear actuator according to claim 5, **characterised by** comprising a plurality of springs means (33, 34) on opposite sides of the sliding block (31).

7. A linear actuator according to claim 5, **characterised by** comprising a guide member (22) for supporting and guiding the electric motor (15) and the gear reduction unit (16).

8. A linear actuator according to claim 1, **characterised in that** the drive device comprises a reversible screw-nut assembly (20, 21).

9. A linear actuator according to claim 1, **characterised in that** the electronic control unit (51) is programmed to shut-off the power supply (52) to the motor (15) and to operate the locking device (17) upon reaching a pre-established value of the current of the electric motor (15).

10. A linear actuator according to claim 1, **characterised in that** the locking device (17) for the electric motor (15) comprises a normally locked electric brake (40, 43, 45).
